# EUROPÄISCHE PATENTSCHRIFT

(11) **EP 2 830 862 B1**
(45) Veröffentlichungstag und Bekanntmachung des Hinweises auf die Patenterteilung: **09.08.2017**
(21) Anmeldenummer: 13705441.7
(22) Anmeldetag: 18.02.2013
(51) Int. Cl.: B29C 73/16

(54) **VORRICHTUNG ZUM ABDICHTEN UND AUFPUMPEN EINES AUFPUMPBAREN OBJEKTS**
DEVICE FOR SEALING AND INFLATING INFLATABLE OBJECT
DISPOSITIF POUR ÉTANCHÉIFIER ET GONFLER UN OBJET GONFLABLE

(30) Priorität: 28.03.2012 DE 202012101110 U
(43) Veröffentlichungstag der Anmeldung: 04.02.2015
(73) Patentinhaber: Continental Reifen Deutschland GmbH, 30165 Hannover (DE)
(72) Erfinder: DETERING, Rainer, 30926 Seelze (DE)
(74) Vertreter: Kilsch, Armin Ralph
(86) Internationale Anmeldenummer: PCT/EP2013/053159
(87) Internationale Veröffentlichungsnummer: WO 2013/143778

(56) Entgegenhaltungen:
- EP-A1- 2 353 848
- EP-A2- 1 605 162
- GB-A- 2 452 137
- JP-A- 2005 256 750
- JP-A- 2007 132 294
- US-A1- 2008 145 245

## Beschreibung

Die Neuerung betrifft eine Vorrichtung zum Abdichten und Aufpumpen aufblasbarer Gegenstände, insbesondere Pannenset zum Abdichten und Aufpumpen von Kraftfahrzeugreifen, wobei die Vorrichtung in einem Gehäuse einen durch einen Motor, vorzugsweise einen Elektromotor angetriebenen Kompressor aufweist zum Aufpumpen der Gegenstände sowie einen Anschluss für einen Behälter mit Dichtmittel, eine Ventil- und Verteilereinheit für Dichtmittel und Druckgas, weiterhin Verbindungsmittel aufweist wie etwa Schläuche zwischen Ventil- und Verteilereinheit und aufblasbarem Gegenstand, sowie ggf. Verbindungsmittel zur Energiezufuhr, und die Schalt-, und/oder Steuer- und Anzeigeeinrichtungen für den Betrieb der Vorrichtung beinhaltet.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits Reparatursätze oder Pannensets bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

So offenbart die DE 29812740 U1 1 einen Reparatursatz mit einem tragbaren Behälter zur Aufnahme von Bordwerkzeugen und Arbeitsgeräten für Fahrzeuge, insbesondere zur Aufnahme von Kompressor, Werkzeugen, Arbeitsgeräten und Zubehör zur Instandsetzung von Reifen, wobei der Behälter in Form eines Koffers ausgebildet ist und mehrere Teilräume für das Zubehör sowie Schalt-, Steuer- und Anzeigeeinrichtungen beinhaltet.

Solche handelsüblichen Pannensets zur Reifenabdichtung verfügen über einen hoch leistungsfähigen Kleinkompressor, in der Regel ein Hubkolbenkompressor, mit dessen Hilfe Reifen aufgepumpt werden können. Anforderungen zum Leichtbau erfordern hier vermehrt den Einsatz von Kunststoffmaterialien für den Kompressormechanismus, also Kompressor mit Kompressorzylinder und Kolben sowie Pleuel, Kurbelrad, Getriebe etc.

Die Verwendung von Kunststoffen in Verbindungen mit einer gewünschten langen Einschaltdauer der Kompressoren und den dadurch höheren Betriebstemperaturen lassen jedoch einen Zielkonflikt entstehen, da die üblichen verwendeten Kunststoffe nachteiligerweise den erhöhten Anforderungen an die Betriebstemperatur kaum genügen und die Geräte durch Überhitzung zu früh ausfallen können.

Hier wurden bereits integrierte Ventilatoren zur Kühlung der Bauteile vorgeschlagen. So offenbart die JP 2007 132294 A einen Kompressor mit einem auf der zentralen Welle eines Motors angeordneten Kühlventilator, wobei der Ventilator an einer im Weiteren beliebigen Stelle innerhalb des Gehäuses angeordnet ist. Nur eine einzige u.a. in den Zeichnungen erkennbare Gehäuseöffnung sorgt für den Austausch von Luft. Durch eine solche Anordnung entstehen innerhalb des Gehäuses Verwirbelungen und Rückströmungen, die ein starkes Vermischen zwischen zugeführter und abgeführter Luft verursachen und so die Kühlung wieder nachteilig beeinflussen.

Die JP 2005 256750 A offenbart eine gattungsbildende Vorrichtung mit einem Kompressor und einem Kühlgebläse, bei dem auf der zentralen Welle eines Motors ein Ventilator angeordnet ist, der unter Bildung eines Umfangsspalts in einer als Durchtrittsblende ausgebildeten Öffnung einer Führungswand rotiert. Die Öffnung in der Führungswand erhöht zwar die Wirkung, d.h. die Förderleistung des Ventilators, verhindert aber nicht, dass im Gehäuse hinter der Durchtrittsblende keinerlei präzise Führung der Kühlluft vorgesehen ist. Die Kühlluft strömt am Gitter in das Gehäuse ein, verteilt sich zufällig entsprechend den im Gehäuse vorhandenen Bauteilen und strömt aus der Austrittsöffnung wieder aus dem Gehäuse aus. Bei der Umströmung der im Gehäuse vorhandenen Bauteile entstehen Wirbel und Rückströmungen, die ein ständiges Vermischen zwischen zugeführter und abgeführter Luft ermöglichen und somit ebenfalls die Kühlleistung herabsetzen.

Die GB 2 452 137 A offenbart einen Pannenhilfe-Set mit einer elektrischen Sicherheitsschaltung, mit deren Hilfe überprüft wird, ob alle mechanischen Druckmittelverbindungen und Dichtmittelverbindungen regelgerecht ausgeführt sind. Der elektrische Motor für den Kompressor umfasst auch einen Kühlventilator, der aber nicht weiter spezifiziert ist. Aus den dortigen Figuren gehen keinerlei Einrichtungen hervor, die eine Wirbelbildung oder das Vermischen von Luftströmungen innerhalb des Gehäuses verhindern und eine ausreichende Kühlleistung bereitstellen könnte.

Die EP 2 353 848 A1 offenbart eine Vorrichtung zum abdichten und aufblasen aufblasbarer Gegenstände mit einem durch einen elektrischen Motor angetriebenen Kompressor. Der elektrische Motor für den Kompressor umfasst auch einen Kühlventilator, der auf der Motorwelle aufgesetzt ist. Der Kühlventilator und dessen Leistung sind jedoch weder in der Beschreibung noch in den Zeichnungen näher spezifiziert. Wirbelbildung oder das Vermischen von Luftströmungen innerhalb des Gehäuses des Pannenhilfe-Sets und damit eine nur reduzierte Kühlleistung sind auch hier nicht ausgeschlossen.

Für die Neuerung bestand also die Aufgabe, eine gattungsgemäße Vorrichtung bereitzustellen, die auch bei den üblicherweise verwendeten Kunststoffbauteilen einen sicheren Dauerbetrieb gewährleistet.

Gelöst wird diese Aufgabe durch die Merkmale des Hauptanspruchs. Weitere vorteilhafte Ausbildungen sind in den Unteransprüchen offenbart.

Eine weitere vorteilhafte Ausbildung besteht darin, dass der Kompressor und/oder seine Einzelteile mit Kühlblechen versehen sind, welche mit einer Wärmeleitpaste großflächig mit der jeweiligen Bauteiloberfläche verbunden sind. Diese Maßnahme wirkt ebenso im Sinne einer weiteren Reduzierung der Temperaturbelastung, wie eine weitere neuerungsgemäße Ausführung, bei der der temperaturfeste Kunststoff mit metallischen Einsätzen versehen ist, welche zur Verbindung mit auf der Außenoberfläche der Kunststoffteile vorgesehenen Kühlblechen ausgebildet sind.

Eine weitere vorteilhafte Weiterbildung zur Temperaturreduzierung im Dauerbetrieb besteht darin, dass die innere Gehäuseformgebung zur Leitung des Kühlluftstromes ausgebildet ist sowie strömungsgünstig geformte Leitflächen aufweist. Durch geeignete Position und Größe von Kühlluftein- und auslass wird der Kühlluftstrom effizient durch das Gehäuse geleitet.

Eine weitere vorteilhafte Weiterbildung besteht darin, dass ein zweiter Kühlventilator innerhalb des Motorgehäuses angeordnet ist. Damit erfolgt im Motor selbst auch eine Kühlung, was wiederum das gesamte Temperaturniveau günstig beeinflusst.

Anhand eines Ausführungsbeispieles soll die Neuerung näher erläutert werden. Es zeigen
- Fig. 1: eine neuerungsgemäße Vorrichtung
- Fig. 2: eine neuerungsgemäße Vorrichtung gemäß Fig. 1 mit eingezeichneten Strömungspfeilen

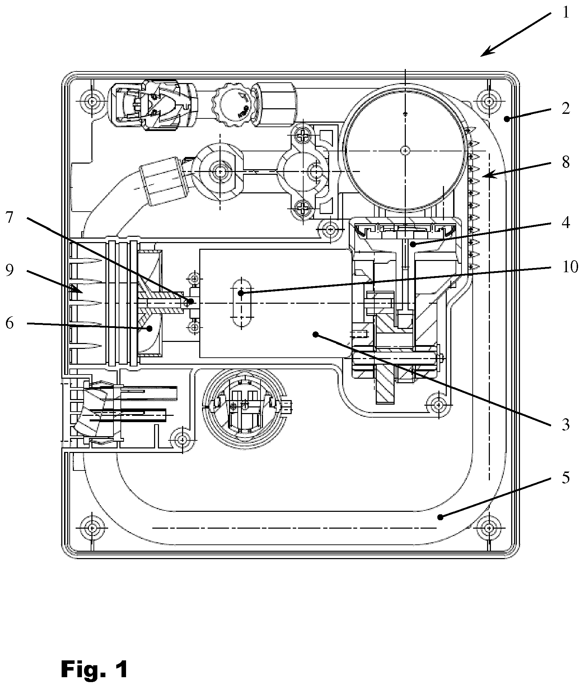

Die Fig. 1 zeigt eine neuerungsgemäße Vorrichtung zum Abdichten und Aufpumpen aufblasbarer Gegenstände, nämlich ein Pannenset 1 zum Abdichten und Aufpumpen von Kraftfahrzeugreifen, mit abgenommenem Deckel. Das Pannenset 1 weist in einem Gehäuse 2 einen durch einen Elektromotor 3 angetriebenen Kompressor 4 auf sowie einen Anschluss für einen Behälter mit Dichtmittel, eine Ventil- und Verteilereinheit, beide hier nicht näher dargestellt. Weiterhin beinhaltet die Vorrichtung einen Schlauch 5 für die Verbindung von Ventil- und Verteilereinheit und aufblasbarem Gegenstand, sowie ebenfalls hier nicht näher dargestellte Verbindungsmittel zur Energiezufuhr, und die Schalt-, und/oder Steuer- und Anzeigeeinrichtungen für den Betrieb der Vorrichtung.

Der Elektromotor 3 zum Antrieb des Kompressors 4 treibt auch einen Kühlventilator 6 an zur Luftkühlung des Kompressors, der Kompressoreinzelteile und des Kompressorgehäuses 2. Der Kühlventilator 6 ist an der dem Kompressor 4 gegenüberliegenden Motorseite auf der zentralen Motorwelle 7 angeordnet.

Das Leitrohr/Leitgehäuse für den Kühlventilator 6 ist hier abgenommen, damit der Ventilator sichtbar ist. Der Kühlventilator 6 wirkt mit Wärmeleitflächen bzw. -Stegen 8 und 9 des Gehäuses bzw. des Kompressors zusammen. Der Kompressor und seine Einzelteile bestehen aus mit Metallfasern versehen temperaturfestem Kunststoff.

Ein zweiter hier nicht sichtbarer Kühlventilator ist innerhalb des Motorgehäuses angeordnet und bläst über einen Auslass 10 die durch den Motor und das Motorgehäuse angewärmte Kühlluft in das Gehäuse 2 und in den Strömungs- oder Ansaugbereich des Kühlventilators 6.

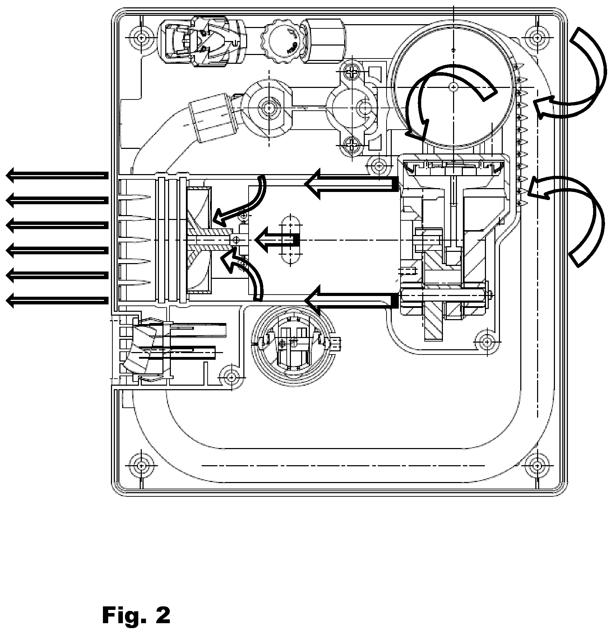

Fig. 2 zeigt mit Hilfe von beispielhaft eingezeichneten Strömungspfeilen, wie das gesamte Innere des Gehäuses zur Leitung der Kühlluftströmung zwischen Lufteinlass an den Stegen 8 und Luftauslass an den Stegen 9 ausgebildet ist.

### Bezugszeichenliste

### (Teil der Beschreibung)

- 1: Pannenset
- 2: Gehäuse
- 3: Elektromotor
- 4: Kompressor
- 5: Schlauch
- 6: Kühlventilator
- 7: Zentrale Motorwelle
- 8: Wärmeleitsteg am Lufteinlass in das Gehäuse
- 9: Wärmleitsteg am Luftauslass aus dem Gehäuse
- 10: Luftauslass am Motorgehäuse

## Patentansprüche

1. Vorrichtung (1) um Abdichten und Aufpumpen aufblasbarer Gegenstände, insbesondere Pannenset zum Abdichten und Aufpumpen von Kraftfahrzeugreifen, wobei die Vorrichtung (1) in einem Gehäuse (2) einen durch einen Motor, vorzugsweise einen Elektromotor (3) angetriebenen Kompressor (4) aufweist zum Aufpumpen der Gegenstände sowie einen Anschluss für einen Behälter mit Dichtmittel, eine Ventil- und Verteilereinheit für Dichtmittel und Druckgas, weiterhin Verbindungsmittel aufweist wie etwa Schläuche (5) zwischen Ventil- und Verteilereinheit und aufblasbarem Gegenstand, sowie ggf. Verbindungsmittel zur Energiezufuhr, und die Schalt-, und/oder Steuer- und Anzeigeeinrichtungen für den Betrieb der Vorrichtung beinhaltet, wobei der Motor einen Kühlventilator (6) zur Luftkühlung des Kompressors, der Kompressoreinzelteile und des Kompressorgehäuses antreibt und der Kühlventilator (6) an der dem Kompressor (4) gegenüberliegenden Motorseite auf der zentralen Motorwelle (7) angeordnet ist, **dadurch gekennzeichnet, dass** der Kühlventilator (6) und so in einem Leitrohr/Leitgehäuse angeordnet ist, dass Rückströmung der schon zur Kühlung genutzten Luft vermieden wird.

2. Vorrichtung nach Anspruch 1, bei der der Kühlventilator mit Leitblechen oder Wärmeleitstegen (8, 9) zusammenwirkt.

3. Vorrichtung nach einem der Ansprüche 1 bis 2, bei der der Kompressor (4) und seine Einzelteile aus temperaturfestem Kunststoff bestehen.

4. Vorrichtung nach Anspruch 3, bei der der temperaturfeste Kunststoff mit Glasfasern und /oder Metallfasern versehen ist.

5. Vorrichtung nach einem der Ansprüche 1 bis 4, bei der der Kompressor (4) und/oder seine Einzelteile mit Kühlblechen oder Wärmeleitstegen (8) versehen sind, welche mit einer Wärmeleitpaste großflächig mit der jeweiligen Bauteiloberfläche verbunden sind.

6. Vorrichtung nach einem der Ansprüche 1 bis 5, bei der der temperaturfeste Kunststoff mit metallischen Einsätzen versehen ist, welche zur Verbindung mit auf der Außenoberfläche der Kunststoffteile vorgesehenen Kühlblechen ausgebildet sind.

7. Vorrichtung nach einem der Ansprüche 1 bis 6, bei der das Gehäuseinnere zur Leitung des Kühlluftstromes ausgebildet ist.

8. Vorrichtung nach einem der Ansprüche 1 bis 7, bei der ein zweiter Kühlventilator innerhalb des Motorgehäuses angeordnet ist.

## Claims

1. Device (1) for sealing and inflating inflatable objects, in particular a puncture-repair kit for sealing and inflating motor-vehicle tyres, wherein the device (1) has in a housing (2) a compressor (4), driven by a motor, preferably an electric motor (3), for inflating the objects and a connection for a container with sealant, a valve and distributor unit for sealant and compressed gas, also has connecting means such as for instance hoses (5) between the valve and distribution unit and the inflatable object and possibly connecting means to the power supply, and includes the switching and/or control and display devices for operating the device, wherein the motor drives a cooling fan (6) for air-cooling the compressor, the individual compressor parts and the compressor housing and the cooling fan (6) is arranged on the central motor shaft (7) on the side of the motor opposite from from the compressor (4), **characterized in that** the cooling fan (6) and is arranged in a conducting tube/conducting housing such that return flow of the air already used for cooling is avoided.

2. Device according to Claim 1, in which the cooling fan acts together with baffles or heat conducting webs (8, 9).

3. Device according to either of Claims 1 and 2, in which the compressor (4) and its individual parts consist of thermally stable plastic.

4. Device according to Claim 3, in which the thermally stable plastic is provided with glass fibres and/or metal fibres.

5. Device according to one of Claims 1 to 4, in which the compressor (4) and/or its individual parts are provided with cooling plates or heat conducting webs (8), which are connected to the respective component surface over a large area by a heat conducting paste.

6. Device according to one of Claims 1 to 5, in which the thermally stable plastic is provided with metallic inserts, which are designed for connection to cooling plates provided on the outer surface of the plastic parts.

7. Device according to one of Claims 1 to 6, in which the housing interior is designed for conducting the cooling air stream.

8. Device according to one of Claims 1 to 7, in which a second cooling fan is arranged inside the motor housing.

## Revendications

1. Dispositif (1) destiné à l'étanchéification et au gonflage d'objets gonflables, en particulier kit de dépannage destiné à l'étanchéification et au gonflage de pneumatiques de véhicules à moteur,
dans lequel le dispositif (1) présente un compresseur (4), lequel se trouve dans un carter (2) et lequel est entraîné par un moteur, de préférence par un moteur électrique (3), en vue du gonflage des objets, ainsi qu'un raccordement pour un réservoir contenant un agent d'étanchéification, une unité de soupape et de distribution pour l'agent d'étanchéification et du gaz sous pression, lequel dispositif présente en outre des moyens de raccordement, tels que par exemple des tuyaux (5) situés entre l'unité de soupape et de distribution et l'objet gonflable, ainsi que, le cas échéant, des moyens de raccordement destinés à l'alimentation en énergie, et lequel dispositif comprend également des mécanismes de commutation et/ou de commande et d'affichage pour le fonctionnement du dispositif ;
dans lequel le moteur entraîne un ventilateur de refroidissement (6) en vue du refroidissement par air du compresseur, des composants individuels du compresseur et du carter du compresseur ; et
dans lequel le ventilateur de refroidissement (6) est disposé sur l'arbre central du moteur (7), du côté du moteur qui se trouve à l'opposé du compresseur (4), **caractérisé en ce que** le ventilateur de refroidissement (6) et est disposé dans un tube de guidage ou dans un carter de guidage, de sorte à éviter tout reflux de l'air déjà utilisé pour le refroidissement.

2. Dispositif selon la revendication 1, dans lequel le ventilateur de refroidissement interagit avec des tôles de guidage ou des lames thermoconductrices (8, 9).

3. Dispositif selon l'une des revendications 1 à 2, dans lequel le compresseur (4) et ses composants individuels sont constitués d'une matière plastique résistant aux températures.

4. Dispositif selon la revendication 3, dans lequel la matière plastique résistant aux températures est pourvue de fibres de verre et/ou de fibres de métal.

5. Dispositif selon l'une des revendications 1 à 4, dans lequel le compresseur (4) et/ou ses composants individuels sont pourvus de tôles de refroidissement ou de lames thermoconductrices (8), lesquelles sont reliées, sur une grande partie de la surface, à la surface de l'élément structurel respectif au moyen d'une pâte thermoconductrice.

6. Dispositif selon l'une des revendications 1 à 5, dans lequel la matière plastique résistant aux températures est pourvue d'inserts métalliques, lesquels sont conçus en vue de la jonction avec des tôles de refroidissement prévues sur la surface externe des composants en plastique.

7. Dispositif selon l'une des revendications 1 à 6, dans lequel l'intérieur du carter est conçu en vue de la canalisation du flux de l'air de refroidissement.

8. Dispositif selon l'une des revendications 1 à 7, dans lequel un deuxième ventilateur de refroidissement est disposé à l'intérieur du carter du moteur.
